# EUROPEAN PATENT SPECIFICATION

(11) **EP 4 280 905 B1**
(45) Date of publication and mention of the grant of the patent: **19.03.2025**
(21) Application number: 22700506.3
(22) Date of filing: 18.01.2022
(51) Int. Cl.: A24F 40/51, A24F 40/10

(54) **AEROSOL GENERATION ASSEMBLY AND METHOD OF CONTINUOUS ESTIMATION OF THE REMAINING AMOUNT OF AEROSOL FORMING PRECURSOR**
AEROSOLERZEUGUNGSANORDNUNG UND VERFAHREN ZUR KONTINUIERLICHEN SCHÄTZUNG DER RESTMENGE EINES AEROSOLERZEUGUNGSVORLÄUFERS
ENSEMBLE DE GÉNÉRATION D'AÉROSOL ET PROCÉDÉ D'ESTIMATION CONTINUE DE LA QUANTITÉ RESTANTE D'UN PRÉCURSEUR DE FORMATION D'AÉROSOLS

(30) Priority: 22.01.2021 EP 21152901
(43) Date of publication of application: 29.11.2023
(73) Proprietor: JT International S.A., 1202 Genève (CH)
(72) Inventor: PILATOWICZ, Grzegorz Aleksander, 1274 Grens (CH)
(74) Representative: Lavoix
(86) International application number: PCT/EP2022/051033
(87) International publication number: WO 2022/157156

(56) References cited:
- US-A1- 2014 238 422
- US-A1- 2015 208 731

## Description

### FIELD OF THE INVENTION

The present invention concerns an aerosol generation assembly comprising an electronic system for estimating continuously the amount of aerosol forming precursor remaining in the storage portion.

The present invention also concerns a method of continuous estimation of the remaining amount of aerosol forming precursor.

### BACKGROUND OF THE INVENTION

Different types of aerosol generation assemblies are already known in the art. Generally, such assemblies comprise a storage portion for storing an aerosol forming precursor. A heating system is formed of one or more electrically activated resistive heating elements arranged to heat said precursor to generate the aerosol. The aerosol is released into a flow path extending between an inlet and outlet of the device. The outlet may be arranged as a mouthpiece, through which a user inhales for delivery of the aerosol.

In some aerosol generation assemblies, the precursor is stored in a removable cartridge. The aerosol generation assembly comprises then an aerosol generation device which defines a cavity in which the cartridge may be inserted. In order to attach the removable cartridge to the device body, a screw-threaded connection can for example be used. When the cartridge is assembled to the aerosol generation device, the device is able to generate the aerosol. When the precursor is consumed, the cartridge can be easily removed and replaced.

It is therefore important for the user to have an accurate estimate of the amount of aerosol forming precursor remaining in the storage portion.

Some known assemblies apply for example no precursor level detection methods. The user has to check by himself the remaining amount of aerosol forming precursor by removing the cartridge or by looking into a special window arranged in the assembly. This is tedious for the user and the accuracy is obviously very limited.

To solve this problem, other known assemblies comprises a sensor to measure the remaining amount of aerosol forming precursor. Such an assembly is notably disclosed in the document US 2017/0071255 A1. This document teaches using for example a capacitive sensor. In particular, a first capacitor plate located at the top wall of the storage portion and a second capacitor plate located at the bottom wall. The capacitance of the capacitor depends on a distance between the two capacitor plates. When the volume of the aerosol forming precursor decreases, the distance between the two plates decreases also and thus the capacitance of the capacitor increases. However, such a method is sensitive to the actual angle of operation of the device which could be confusing or provide liquid level readings with limited accuracy.

For example, US 2015/208731 discloses an aerosol generation assembly comprising a liquid storage portion for storing an e-liquid and a vaporizer including a heating element, the vaporizer being configured to vaporize e-liquid stored in the liquid storage portion.

### SUMMARY OF THE INVENTION

One of the aims of the present invention is therefore to provide an aerosol generation assembly able to offer a better accuracy in estimating the amount of aerosol forming precursor remaining in the storage portion, the estimation being carried out continuously.

For this purpose, the invention relates to an aerosol generation assembly comprising a storage portion for storing an aerosol forming precursor; a heater configured to heat the aerosol forming precursor to generate aerosol into a flow path; at least one gauge sensor configured to provide data relative to the amount of aerosol forming precursor remaining in the storage portion; a puff sensor configured to detect and to provide data relative to the flowrate of the generated aerosol in the flow path and an electronic system for estimating continuously the amount of aerosol forming precursor remaining in the storage portion comprising :
- an estimation module configured to determine continuously an estimated amount of aerosol forming precursor remaining in the storage portion based on the data provided by the puff sensor; and
- a recalibration module configured to recalibrate at several intervals of time said estimated amount based on the data provided by the or each gauge sensor, to obtain a recalibrated amount of aerosol forming precursor remaining in the storage portion.

Indeed, using these features, the aerosol generation assembly is able to both estimate continuously the remaining amount of liquid in the storage portion thanks to the puff sensor and recalibrate regularly this estimated amount with the at least one gauge sensor offering the best accuracy at a certain time stamp.

The puff sensor enables to determine how much precursor is consumed at each puff. This estimation does not depend on the orientation of the assembly. However, the puff sensor presents a certain inaccuracy which is accumulating over time. The recalibrations enable to avoid dealing with elevated levels of total error. The recalibration is carried out using the at least one gauge sensor. This enables to avoid reaching too high level of error over time.

The invention enables therefore a highly accurate and reliable precursor level determination in the storage portion. The user has an accurate estimation of the amount of precursor remaining in the storage portion over time and may easily plan the refueling of the storage portion when needed.

The invention enables also an accurate dry-puff detection and prevention thanks to this accurate precursor level determination.

According to some embodiments, the electronic system further comprises a post-treatment module configured to determine a displayed amount of aerosol forming precursor remaining in the storage portion based on the estimated amount of aerosol forming precursor remaining in the storage portion; the post-treatment module being configured to display said displayed amount on a display screen arranged on the aerosol generation assembly and/or to send a signal to an external device comprising the said displayed amount.

By implementing this feature, the displayed amount of precursor may be displayed directly on the display screen so that the user of the device may easily check the remaining amount of precursor and if needed refuel the storage portion. The displayed amount may also be sent to an external device such as a smartphone in order to display the remaining amount on the smartphone and store this value in the memory of the smartphone to obtain a summary of the user consumption.

According to some embodiments, the displayed amount is updated after a recalibration to the estimated amount after the next detection of a flowrate in the flow path by the puff sensor, preferably with a smoothing slope.

By implementing this feature, the user is not confused by the recalibration which could result in an increase or decrease of the displayed remaining amount into the storage portion without the user having vaped recently. Therefore, in order to not confuse the user, the displayed amount is only updated after a detection of a flowrate, while the user is vaping. The displayed amount being modified by the vaping, the user does not notice the recalibration which is applied.

Preferably, the recalibration is carried out with a smoothing slope. For example, in case of an overestimation of the remaining amount of precursor in the storage portion, the consumption of precursor during vaping is artificially increased with the smoothing slope so that the displayed estimated amount is again much closer to the reality after the vaping session. In this case of an underestimation of the remaining amount of precursor in the storage portion, consumption of precursor is artificially slowed down with the smoothing slope. The displayed mount is therefore displayed and updated in a natural and intuitive way for the user.

According to some embodiments, the puff sensor is configured to detect the presence of a flow into the flow path and the associated duration of the said flow, the estimation module being configured to determine the amount of aerosol flowing out of the device by multiplying the duration of the said flow by a predetermined average aerosol flowrate.

By implementing this feature, the consumption of precursor during the vaping session is determined easily by multiplying the predetermined average aerosol flowrate by the puff duration. The consumption estimation can thus be implemented in a basic and therefore low cost way.

According to some embodiments, the puff sensor is configured to detect the presence of a flow into the flow path, and measure the flowrate of the flow and the duration of the flow, the estimation module being configured to determine the amount of aerosol flowing out of the device by multiplying the duration of the said flow by the measured flowrate.

By implementing this feature, the estimation of the consumption of precursor during the vaping session is determined by integrating the measured flowrate during the vaping session. The measured flowrate depends notably on the puff strength applied by the user. This more sophisticated calculation enables therefore a more precise estimation of the precursor consumption and reduces the inaccuracies which are accumulating over time.

According to some embodiments, the or each gauge sensor is chosen among a capacitive sensor arranged along the storage portion; a plurality of hall sensors arranged along the storage portion and able to detect a sliding magnet arranged inside the storage portion and floating on the aerosol precursor; and a plurality of induction coils arranged along the storage portion and able to heat a metallic strip arranged inside the storage portion and a resistivity sensor able to measure the resistivity of the metallic strip.

By implementing this feature, the gauge sensor can be implemented by different sensors having each its own sensitivity and advantages as it will be further described below. The sensor may be chosen basing on the device design, desired estimation precision and cost constraints.

According to some embodiments, the estimation module is configured to associate a confidence index to the estimated amount of aerosol forming precursor remaining in the storage portion, the confidence index decreasing with time at a decreasing rate function of a predetermined accuracy of the puff sensor; the confidence index being reset after each recalibration.

By implementing this feature, the confidence index associated to the estimated amount enables to monitor and control this estimation. Indeed, there are multiple sources of errors which cause accumulation of error over time. Therefore, the confidence index decreases with time function of different identified parameters and notably function of a predetermined accuracy of the puff sensor. Indeed, among the different sources of error as for example integration errors, errors due to vaporization or eventual leakages, it is considered that measurement inaccuracies are the main error factor. By regularly recalibrating the estimated amount, the accumulation of error over time and therefore the confidence index are reset and it is possible to control the accuracy of the estimation.

According to some embodiments, the recalibration module is configured to associate a confidence score to the data provided by the or each gauge sensor; the recalibration module being configured to recalibrate the amount of aerosol forming precursor when at least one of the confidence scores is higher than the confidence index associated to the estimated amount of aerosol forming precursor remaining in the storage portion.

By implementing this feature, the data provided by each gauge sensor is associated to a confidence score function of the accuracy of said data. The more accurate the data provide by the sensor is, the higher the confidence score is. When at least one of the confidence scores is higher than the confidence index associated to the estimated amount, meaning that the gauge sensor is able to provide a more reliable data concerning the remaining amount of precursor in the storage portion, the recalibration is carried out with the data provided by this gauge sensor. The recalibration is therefore only carried out when the confidence index becomes too high and that the reliability of the estimated amount can be increased with the recalibration.

According to some embodiments, the recalibrated amount of aerosol forming precursor remaining in the storage portion is function of the data provided by the or each gauge sensor adjusted by the associated confidence score.

By implementing this feature, the recalibration is be carried out using a weighted mechanism in which the data provided by each gauge sensor is adjusted to its associated confidence score. Therefore, the most accurate gauge sensor, i.e. presenting the highest confidence score, has a bigger influence on the recalibration than a less accurate gauge sensor. The recalibrated amount of precursor in the storage portion is thus more accurate.

According to some embodiments, the aerosol generation device further comprises an accelerometer configured to determine an angle of the aerosol generation device with a vertical direction; the confidence score being function of said angle; the confidence score being minimal when the angle is equal to 90°.

By implementing this feature, the confidence score associated to the data provided by each gauge sensor takes into account the inclination of the aerosol generation device. Indeed, the gauge sensors presents the best accuracy when the aerosol generation device is oriented vertically, the mouthpiece upward. As it will be shown below in more detail, when the aerosol generation device presents an angle with a vertical direction, the accuracy is more limited and the accuracy is even minimal when the aerosol generation device is horizontal. Therefore, the confidence score taking into account the angle of the aerosol generation device provided by the accelerometer enables to recalibrate the estimated amount only when the data provided by the gauge sensors is accurate, i.e. when the aerosol generation device is vertical.

According to some embodiments, the storage portion is defined by walls made of a non-transparent material.

By implementing this feature, using non transparent materials, as for example a non-transparent plastic, enables to reduce the cost of the material or to use more sustainable material without any compromise of the performance. Indeed, the invention offers more flexibility to pick any housing material as transparency is not required to estimate the remaining amount of precursor in the storage portion.

According to some embodiments, the aerosol generation device comprises a plurality of gauge sensors.

By implementing this feature, the recalibration may be carried out by a plurality of gauge sensors, advantageously from different types of sensors, which enables a more reliable recalibration and provides redundancy in case of failure of one of the gauge sensors.

The invention also relates to a method of continuous estimation of the amount of aerosol forming precursor remaining in the storage portion of an aerosol generation device according to one of the preceding claims, the method comprising the following steps:
- detection of a flowrate in the flow path by the puff sensor ;
- continuous determination of an estimated amount of aerosol forming precursor remaining in the storage portion based on the data provided by the puff sensor, and
- recalibration at several intervals of time the said estimated amount based on the data provided by the or each gauge sensor.

According to some embodiments, the method further comprises further the followings steps:
- determination of a displayed amount of aerosol forming precursor remaining in the storage portion based on the estimated amount of aerosol forming precursor remaining in the storage portion;
- display of said displayed amount on a display screen arranged on the aerosol generation device or sending of a signal to an external device comprising the said displayed amount.

According to some embodiments, the method further comprises further the followings steps:
- new detection by the puff sensor of a flowrate in the flow path after the recalibration step;
- update the displayed amount to the estimated amount after the new detection, preferably with a smoothing slope.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a schematic diagram of an aerosol generation device according to the invention comprising a storage portion and an electronic system for estimating continuously the amount of aerosol forming precursor remaining in the storage portion,
- Figure 2 shows a schematic diagram of the electronic system of Figure 1,
- Figure 3 shows a storage portion and a gauge sensor being a capacitive sensor in different orientations,
- Figure 4 shows a storage portion and a gauge sensor being a plurality of hall sensors arranged along the storage portion,
- Figure 5 shows a storage portion and a gauge sensor being plurality of induction coils arranged along the storage portion,
- Figure 6 is a graph representing the puff sensor detecting different puffs over time,
- Figure 7 is a graph representing the puff sensor detecting different puffs over time in another embodiment of the puff sensor,
- Figure 8 is a graph representing the error in estimating the remaining amount of precursor in the storage portion over time with and without recalibrations,
- Figure 9 is a graph representing the displayed amount of precursor remaining in the storage portion over time, and
- Figure 10 shows a flowchart of a method, according to the invention, of continuous estimation of the amount of aerosol forming precursor remaining in the storage portion, carried out by the electronic system of Figure 2.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generation device"** or **"device"** may include a vaping device to deliver an aerosol to a user, including an aerosol for vaping, by means of aerosol generating unit (e.g. an aerosol generating element which generates vapor which condenses into an aerosol before delivery to an outlet of the device at, for example, a mouthpiece, for inhalation by a user). The device may be portable. "Portable" may refer to the device being for use when held by a user. The device may be adapted to generate a variable amount of aerosol, e.g. by activating a heater system for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapor to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol"** may include a suspension of precursor as one or more of: solid particles; liquid droplets; gas. Said suspension may be in a gas including air. Aerosol herein may generally refer to/include a vapor. Aerosol may include one or more components of the precursor.

As used herein, the term **"aerosol-forming precursor" or "precursor" or "aerosol-forming substance" or "substance" or "vaporizable material"** is used to designate any material that is vaporizable in air to form aerosol. Vaporisation is generally obtained by a temperature increase up to the boiling point of the vaporization material, such as at a temperature up to 400°C, preferably up to 350°C. The vaporizable material may, for example, comprise or consist of an aerosol-generating liquid, gel, or wax or the like or an aerosol -generating solid that may be in the form of a rod, which contains processed tobacco material, a crimped sheet or oriented strips of reconstituted tobacco (RTB), or any combination of these. The vaporizable material may comprise one or more of: nicotine; caffeine or other active components. The active component may be carried with a carrier, which may be a liquid. The carrier may include propylene glycol or glycerin. A flavoring may also be present. The flavoring may include Ethylvanillin (vanilla), menthol, Isoamyl acetate (banana oil) or similar.

As used herein, the term **"external device" or "external computing device"** may refer to a device, which is able to establish a wireless data connection with the aerosol generation device as it is explained in the specification. Such an external device may be a mobile device like a mobile phone for example. Additionally, such an external device may be a smart device able to process at least some data received from the aerosol generation device or intended to be transmitted to the aerosol generation device. Such a smart device can be a smartphone, a smartwatch, a tablet computer, a laptop, a desktop computer or any other smart object implemented for example according to the loT ("Internet of things") technology. Such a smart device can be also another aerosol generation device similar to said aerosol generation device.

### DESCRIPTION OF AN EMBODIMENT OF THE INVENTION

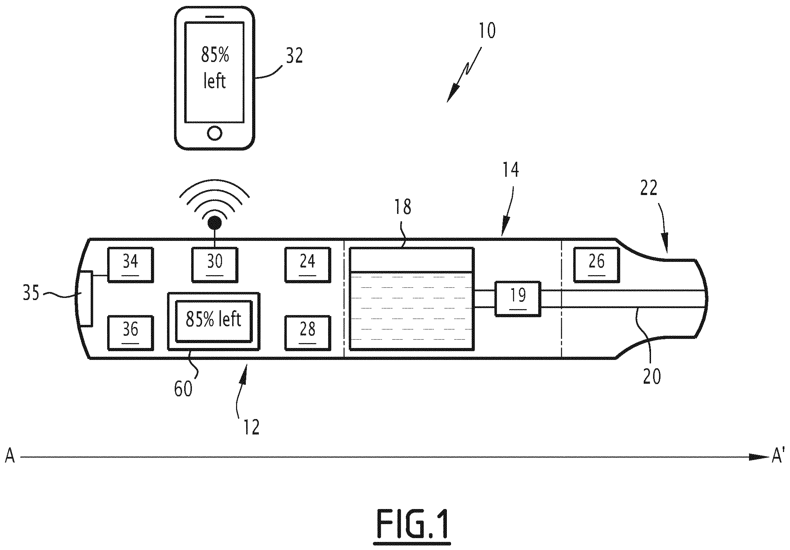

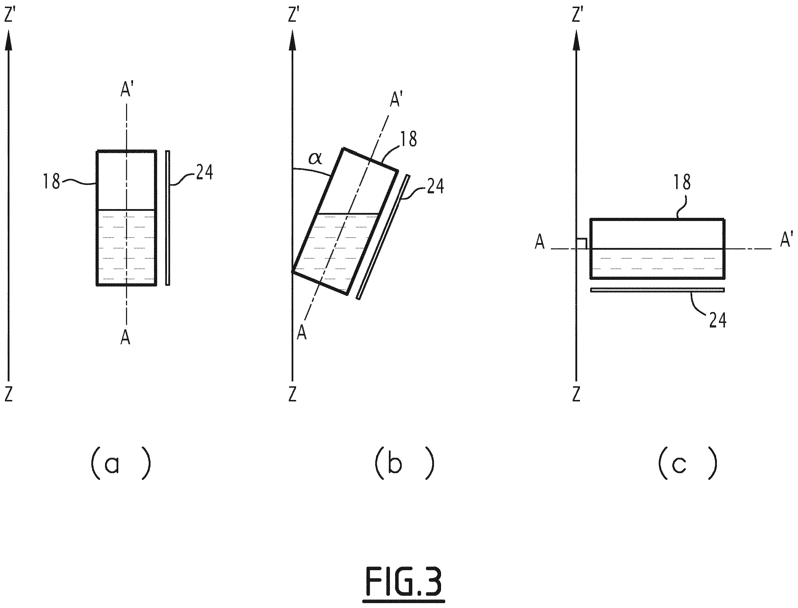

The aerosol generation assembly 10 according to the invention is shown on Figure 1. The aerosol generation assembly 10 extends along an axis A-A' called hereinafter longitudinal axis A-A'. The aerosol generation assembly 10 comprises an aerosol generation device 12 and a cartridge 14 received in a payload compartment of the device 12. The cartridge 14 comprises a storage portion 18 able to store an aerosol forming precursor. The storage portion 18 extends along the longitudinal axis X-X' as visible on Figures 3, 4 and 5.

The cartridge 14 may be fixed permanently to the device 12. In this case, the payload compartment defines the fixed, in respect to the device 12, precursor storage portion 18. The storage portion 18 defines an opening enabling the user to refuel the storage portion 18 with aerosol forming precursor.

In a variant, the cartridge 14 may be removable. In this case, the payload compartment is arranged to receive the removable cartridge 14. In order to attach the removable cartridge 14 to the device 12 body, a screw-threaded connection can for example be used. When the precursor is consumed, the cartridge 14 may be easily removed and replaced by the user.

As it will be explained below, transparency of the storage portion 18 is not required to estimate the remaining amount of precursor in it. Therefore, advantageously, the storage portion 18 is defined by walls made of a non-transparent material. By "non-transparent material" it is meant a material which does not allow the light to pass through. Said walls are those of the payload compartment defining the storage portion 18 or, in said variant, the walls of the removable cartridge 14. As explained previously, using non-transparent materials enables to reduce the cost of the material by using for example a non-transparent plastic. Using non-transparent materials may also enable to use more sustainable material as for example metallic materials and eventually avoid design constraints of the device that should be respected in case of using of transparent materials.

The cartridge 14 comprises further a heater 19 formed of one or more electrically activated resistive heating elements arranged to heat the aerosol forming precursor to generate the aerosol. In a variant, the heater 19 may be an induction heater. In another variant, the heater 19 may be a nebulizer, in particular a vibrating mesh nebulizer, a thermal inkjet printhead or a surface acoustic wave nebulizer. In a variant, the heater 19 is a ohmic heater.

The heater 19 of the cartridge 14 is connected electrically to a power source of the aerosol generation device 12 through a pair of contacts arranged in both cartridge 14 and aerosol generation device 12. According to another embodiment of the invention, the heating system of the cartridge 14 may be coupled with a heating element arranged in the device 12 and powered by the power source of this device 12. In this case, heat is transmitted directly from the heater of the device 12 to the heater of the cartridge 14.

The aerosol is released into a flow path 20 extending between an inlet and outlet of the device 12. The outlet may be arranged as a mouthpiece 22, through which a user inhales for delivery of the aerosol.

As shown on Figure 1, the aerosol generation assembly 10 according to the invention comprises at least one gauge sensor 24, a puff sensor 26 and an electronic system 28 for estimating continuously the amount of aerosol forming precursor remaining in the storage portion 18.

The aerosol generation assembly 10 may further comprise an antenna 30 for communication with an external computing device 32 and a battery cell 34 comprising for example a rechargeable lithium-ion battery known in the art. The battery cell 34 is connected to a connector 35 able to receive an external power supply signal adapted to charge the battery cell 34.

The aerosol generation assembly 10 further comprises an accelerometer 36 configured to determine an angle α of the aerosol generation assembly 10 with a vertical direction Z-Z', as visible on Figure 3. The angle α equals to 0 when the assembly 10 is vertical, the mouthpiece 22 directed to the top and the angle α equals to 180° when the assembly 10 is vertical, the mouthpiece 22 directed to the bottom towards the ground.

Each gauge sensor 24 is configured to provide data relative to the amount of aerosol forming precursor remaining in the storage portion 18. The provided data is notably the volume of precursor remaining in the storage portion 18 or a percentage of the volume of remaining precursor in respect to the total volume of the storage portion 18. At 100%, the storage portion 18 is full with aerosol forming precursor and at 0%, the storage portion 18 is empty.

As illustrated on Figure 3, each gauge sensor 24 may be a capacitive sensor arranged along the storage portion 18. In particular, the capacitive sensor extends along the longitudinal axis A-A' of the assembly 10. As shown on Figure 3, the capacitive sensors extends along the whole length of the storage portion 18 along the longitudinal axis A-A'. The capacitive sensor is arranged outside the storage portion 18. Capacitive sensing is a technology, based on capacitive coupling, that can detect and measure anything that is conductive or has a dielectric capacitance different from air. Capacitive sensors work by detecting any change in the electric field the sensor can register. In particular, the capacitance of a sensor can be changed by the presence of a fluid. Therefore, the gauge sensor 24 is able to detect the presence of aerosol forming precursor in the storage portion 18, through the walls of the storage portion 18.

As visible on Figure 3, the measure of the gauge sensor 24, here a capacitive sensor, is depending on the orientation of the assembly 10 and in particular of the angle α defined by the aerosol generation assembly 10 with the vertical direction Z-Z'. Indeed, in respect to situation (a) on Figure 3, when the assembly 10 is extending vertically, the aerosol forming precursor is received at the bottom of the storage portion 18 and the level of the precursor is perpendicular to the capacitive sensor. In this case, the measure of the capacitive sensor is optimal. The capacitive sensor will detect the presence of precursor over the half of the length of the storage portion 18 which corresponds to the effective remaining amount of precursor. In respect to situation (b) on Figure 3, when the assembly 10 is oriented with an angle in respect to the vertical direction Z-Z', the level of precursor is no more perpendicular to the capacitive sensor. Here, the capacitive sensor will detect the presence of precursor over the three quarter of the length of the storage portion 18 whereas there is no more a half of precursor left in the storage portion 18. In respect to situation (c) on Figure 3, when the assembly 10 is oriented horizontally, the measure is the less relevant. In the present case, the capacitive sensor will detect the presence of precursor over the whole length of the storage portion 18 whereas there is no more a half of precursor left in the storage portion 18. The other way around, if the capacitive sensor is oriented above, the capacitive sensor will detect no presence at all of precursor over the whole length of the storage portion 18.

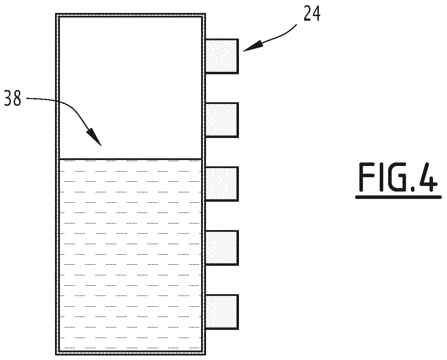

In a variant illustrated on Figure 4, each gauge sensor 24 is a plurality of hall sensors arranged along the storage portion 18. Here, the gauge sensor 24 comprises five hall sensors but the skilled person will understand that the number of hall sensors may be adjusted to the design of the storage portion 18. In particular, the hall sensors are arranged along the longitudinal axis A-A' of the assembly 10. As shown on Figure 4, the hall sensors are arranged along the whole length of the storage portion 18 along the longitudinal axis A-A'. Each hall sensor is a device able to measure the magnitude of a magnetic field. The output voltage of each hall sensor is directly proportional to the magnetic field strength through it. In particular, as visible on Figure 4, each hall sensor is able to detect a sliding magnet 38 arranged inside the storage portion 18 and floating on the aerosol precursor. Therefore, it is possible to detect the position of the sliding magnet 38 along the storage portion 18 and in consequence to determine the remaining amount of precursor in the storage portion 18.

For the same reasons as for the capacitive sensor, the measure of the gauge sensor 24 comprising the hall sensors is depending on the orientation of the assembly 10 and in particular on the angle α defined by the aerosol generation assembly 10 with the vertical direction Z-Z'. The measure of the hall sensors is optimal when the assembly 10 is vertical and the measure is the less relevant when the assembly is horizontal.

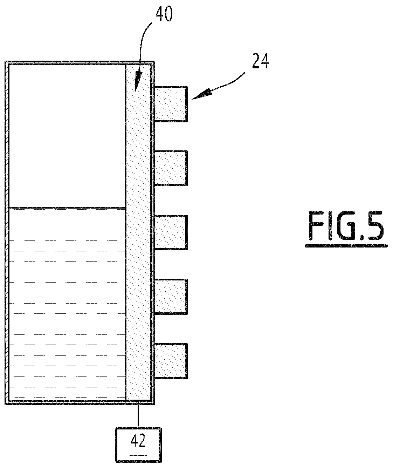

In a variant illustrated on Figure 5, each gauge sensor 24 is a plurality of induction coils arranged along the storage portion 18. Here, the gauge sensor 24 comprises five induction coils but the skilled person will understand that the number of induction coils may be adjusted to the design of the storage portion 18. In particular, the inductive coils are arranged along the longitudinal axis A-A' of the assembly 10. As shown on Figure 4, the inductive coils are arranged along the whole length of the storage portion 18 along the longitudinal axis A-A'. Each inductive coil develops a magnetic field when a current flows through it. Each inductive coil is able to heat a metallic strip 40 arranged inside the storage portion 18. The gauge sensor 24 further comprises a resistivity sensor 42 able to measure the resistivity of the metallic strip 40. Indeed, the metallic strip 40 presents a steep temperature curve function of the heat provided to the metallic strip 40. As the aerosol forming precursor cools the metallic strip 40, it is possible to link the resistivity of the metallic strip 40 with the remaining amount of precursor in the storage portion 18.

For the same reasons as for the capacitive sensor, the measure of the gauge sensor 24 constituted by the inductive coils and the resistivity sensor 42 is depending on the orientation of the assembly 10 and in particular of the angle α defined by the aerosol generation assembly 10 with the vertical direction Z-Z'. The measure is optimal when the assembly 10 is vertical and the measure is the less relevant when the assembly 10 is horizontal.

The puff sensor 26 is configured to detect and to provide data relative to the flowrate of the generated aerosol in the flow path 20. The puff sensor 26 is for example configured to detect a pressure drop in the flow path 20 caused by the user taking a puff and creating a flow of aerosol in the flow path 20. Advantageously, the defection of a puff only starts when the flowrate is greater than a first predetermined threshold value to avoid detecting noises, which do not correspond to a real puff. Furthermore, the detection of a flowrate greater than a second threshold value is not considered as a puff but rather a possible technical issue.

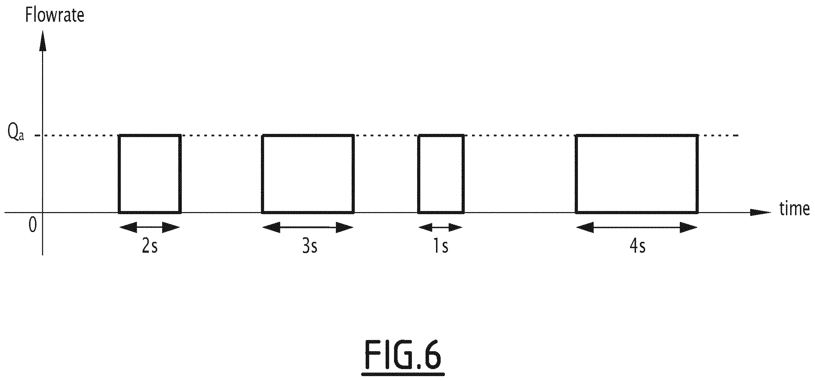

In reference to Figure 6, the puff sensor 26 is configured to detect the presence of a flow into the flow path 20 and the associated duration of the said flow. When the user stops puffing, the pressure drop in the flow path 20 disappears and the flow of aerosol stops. In this embodiment, the puff sensor 26 is a sensor providing a binary information (ON or OFF) concerning the presence of a flow in the flow path 20 and the associated duration.

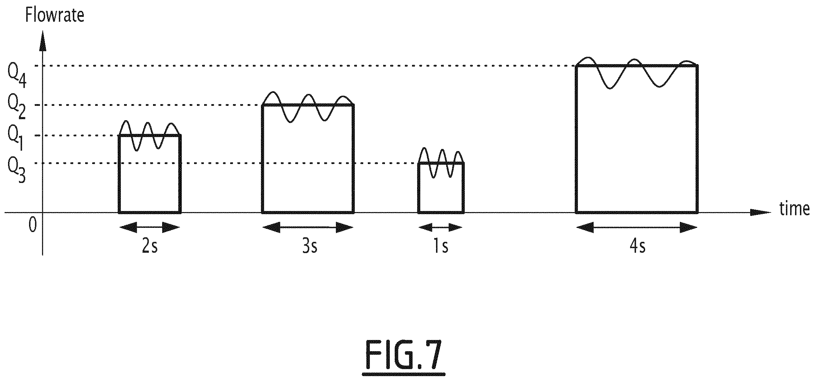

In an advantageous embodiment, in reference to Figure 7, the puff sensor 26 is configured to detect the presence of a flow into the flow path 20 and to measure the flowrate of the flow and the duration of the flow. In this case, the puff sensor 26 is configured to provide precise information concerning the amount of aerosol flowing through the flow path 20, for example by linking the intensity of the pressure drop in the flow path 20 with the aerosol flowrate. Advantageously, as represented on Figure 7, the puff sensor 26 is configured to provide the average value of the flowrate during each puff, and the duration of said puff.

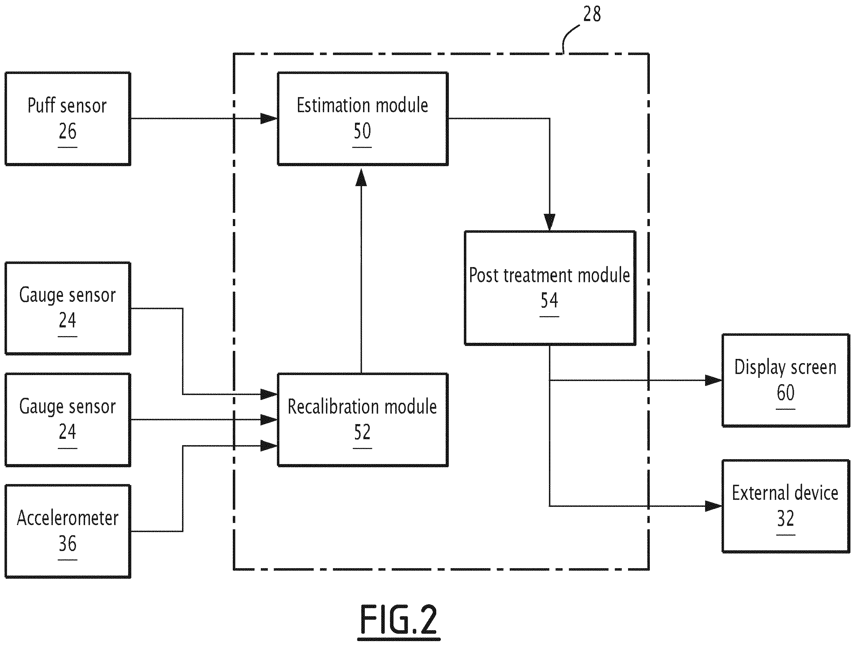

As visible on Figure 2, the electronic system 28 comprises an estimation module 50, a recalibration module 52 and a post treatment module 54.

The estimation module 50 is configured to determine continuously an estimated amount of aerosol forming precursor remaining in the storage portion 18 based on the data provided by the puff sensor 26. By "continuously", it is meant that the estimation is done without interruption during time. When the puff sensor 26 detects no presence of aerosol flow in the flow path 20, the continuous estimation is keeping the same amount of aerosol forming precursor in the storage portion. When the puff sensor 26 detects a flow, the estimation module 50 is configured to determine automatically a new estimated amount of precursor in the storage portion 18. The estimated amount of precursor in the storage portion 18 may be calculated by the following formula: Remaining precursor amount = maximum precursor amount - ∫ (precursor consumption during puff per sec) dt

In particular, when the puff sensor 26 is configured to detect the presence of a flow into the flow path 20 and the associated duration of the said flow, the estimation module 50 is configured to determine the amount of aerosol flowing out of the assembly 10 by multiplying the duration of the said flow by a predetermined average aerosol flowrate Qa. The predetermined average aerosol flowrate Qa is for example a value determined through experimental investigation, thanks to tests carried out with different users which enable to determine the average aerosol flowrate. In variant, the predetermined average aerosol flowrate Qa is determined based on tests realized with the user of said aerosol generation assembly 10 to provide a more accurate value. This averaged aerosol flowrate Qa is then representative of an average puff of the user. By multiplying the averaged aerosol flowrate by the duration of the puff, the estimation module 50 is able to determine the quantity of aerosol which has flowed through the flow path 20 and thus the quantity of aerosol forming precursor which has been consumed in the storage portion 18. In the example shown on Figure 6, four puffs have been detected, during respectively 2, 3, 1 and 4 seconds. The predetermined average aerosol flowrate Qa is for example equal to 68 mL per second. In this case, the estimation module 50 determines that (2+3+1+4) × 68 = 680 mL of aerosol has flowed through the flow path 20. The experimental investigation enables to determine that the average aerosol flowrate Qa of 68 mL/s corresponds to a consumption of aerosol of 0.0013 mL/s. In consequence, the estimation module 50 determines that (2+3+1+4) × 0.0013 = 0.013 mL of precursor has been consumed.

In the embodiment when the puff sensor 26 is configured to detect the presence of a flow into the flow path 20 and to measure the flowrate of the flow and the duration of the flow, the estimation module 50 is configured to determine the amount of aerosol flowing out of the device by multiplying the duration of the said flow by the measured flowrate. In the example shown on Figure 7, four puffs have been detected, during respectively 2, 3, 1 and 4 seconds and with a flowrate of respectively Q1, Q2, Q3 and Q4. In this case, the estimation module 50 determines that 2xQ1+3xQ2+1xQ3+4xQ4 of aerosol has flowed through the flow path 20. In consequence, the estimation module 50 determines that 2×0.0013+3×0.0016+1×0.0010+4×0.0019 = 0.016 mL of precursor has been consumed.

The estimation module 50 is further configured to associate a confidence index to the estimated amount of aerosol forming precursor remaining in the storage portion 18. The confidence index decreases with time at a decreasing rate function of a predetermined accuracy of the puff sensor 26. There are multiple sources of errors which cause accumulation of error over time. Therefore, the confidence index decreases with time function of different identified parameters and notably function of the predetermined accuracy of the puff sensor 26. Indeed, among the different sources of error as for example integration errors, errors due to vaporization or eventual leakages, it is considered that measurement inaccuracies are the main error factor. The more inaccurate the puff sensor 26 is, the more the confidence index decreases with time. In other words, the confidence index decreases with a slope proportional with the inaccuracy of the puff sensor 26. The decreasing rate is for example determined through experimental tests on the said puff sensor 26. The confidence index is reset after each recalibration, as it will be explained below.

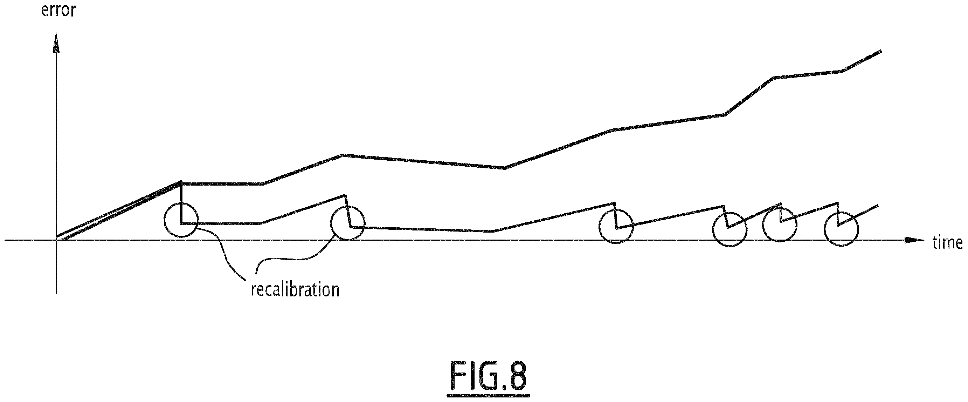

The recalibration module 52 is configured to recalibrate at several intervals of time said estimated amount based on the data provided by the or each gauge sensor 24, to obtain a recalibrated amount of aerosol forming precursor remaining in the storage portion 18. Indeed, as explained before, the puff sensor 24 presents a certain inaccuracy which is accumulating over time. Thus, in order to avoid dealing with elevated levels of total error it must be recalibrated frequently. The recalibration is carried out using the information provided by the or each gauge sensor 26. When a recalibration occurs, the recalibration module 52 is able to replace the value of the estimated remaining amount of precursor in the storage portion 18 determined by the estimation module 50, by the value measured by the gauge sensor 26. This recalibration enables to avoid reaching too high level of error over time. Figure 8 represents the accumulating error over time without recalibration on one hand and with regular recalibration on the other hand. The error is inversely proportion to the confidence index. Without recalibration, the error is accumulating over time and may reach important values making the measures inaccurate. On the contrary, Figure 8 shows that the recalibrations at different intervals of time enables to maintain the error level low and guarantee that the estimated amount is accurate enough.

The recalibration module 52 is further configured to associate a confidence score to the data provided by the or each gauge sensor 24. In particular, the data provided by each gauge sensor 24 is associated to a confidence score function of the accuracy of said data. The more accurate the data provided by the gauge sensor 24 is, the higher the confidence score is. In other words, the confidence score is proportional with the accuracy of the data provided by the gauge sensor 24. The recalibration module 52 is configured to recalibrate the amount of aerosol forming precursor when at least one of the confidence scores is higher than the confidence index associated to the estimated amount of aerosol forming precursor remaining in the storage portion 18. Therefore, when a at least one of the confidence scores is higher than the confidence index associated to the estimated amount, meaning that the gauge sensor 24 is able to provide a more reliable data concerning the remaining amount of precursor in the storage portion 18, the recalibration is carried out with the data provided by this gauge sensor 24. The recalibration is therefore only carried out when the confidence index becomes too high and that the reliability of the estimated amount can be increased with the recalibration.

Advantageously, the recalibrated amount of aerosol forming precursor remaining in the storage portion 18 is function of the data provided by the or each gauge sensor 26 adjusted by the associated confidence score. The recalibration is carried out using a weighted mechanism in which the data provided by each gauge sensor 24 is adjusted to its associated confidence score. Therefore, the more accurate gauge sensor 24, i.e. presenting the highest confidence score, has a bigger influence on the recalibration than a less accurate gauge sensor 24. The recalibrated amount of precursor in the storage portion is thus more accurate. The recalibrated amount is for example calculated with the following formula in case of the presence of two gauge sensors 24: Recalibrated precursor amount = (estimated amount × confidence index + first gauge sensor measure × first confidence score + second gauge sensor measure × second confidence score) / (confidence index + first confidence score + second confidence score)

The confidence score is function of the angle α of the aerosol generation assembly 10 with the vertical direction Z-Z'. In particular, the confidence score is minimal when the angle α is equal to 90°. The confidence score is maximal when the angle α is equal to 0°. Indeed, in reference to Figure 3, and as explained previously, the measure done by the gauge sensor 24 is optimal when the aerosol generation assembly 10 is vertical and is not accurate when the assembly 10 is horizontal. The confidence score is for example a cosinus function depending on the angle α.

The post-treatment module 54 is configured to determine a displayed amount of aerosol forming precursor remaining in the storage portion 18 based on the estimated amount of aerosol forming precursor remaining in the storage portion 18. The post-treatment module 54 is configured to display said displayed amount on a display screen 60 arranged on the aerosol generation assembly 10. As visible on Figure 1, the display screen 60 is able to display said displayed amount of precursor as a percentage of the maximal capacity of the storage portion 18. As an example, here, the storage portion 18 comprises 85% of precursor left. The display screen 60 is, for example, turned on when the assembly 10 is switched on and/or during each vaping session and/or when the user is taping on the screen 60. The screen 60 comprises then another capacitive sensor able to detect the finger of the user and to switch on the screen 60 in consequence.

In variant or in complement, the post-treatment module 54 is configured to send a signal comprising said displayed amount to the external device 32. As visible on Figure 1, the external device 32, here a user's smartphone, is then able to display the displayed amount on its screen. The smartphone comprises notably an application in which the user may consult the displayed amount of precursor and his/her consumption history. The user may further commands with the app a new cartridge 14 when the storage portion 18 is almost empty.

The displayed amount is updated after a recalibration to the estimated amount after the next detection of a flowrate in the flow path 20 by the puff sensor 26. In other words, if a recalibration occurs when the user is not vaping, the displayed amount is not updated instantly to the recalibrated estimate amount but only during the next vaping session. It means that if the user activates the assembly 10 but do not use it for vaping, the level of precursor displayed is not modified. Thus, the user is not confused by the recalibration which could result in an increase or decrease of the displayed amount into the storage portion 18 without the user having vaped recently. Therefore, in order to not confuse the user, the displayed amount is only updated after a detection of a flowrate, while the user is vaping. The displayed amount being modified by the vaping, the user does not notice the recalibration which is applied to the precursor amount.

Advantageously, the displayed amount is updated with a smoothing slope in order to avoid jumps over time of the displayed amount. The updating is realized by artificially increasing or decreasing the precursor consumption during the vaping session. The smoothing slope is adapted depending on the importance of the recalibration. For example, if the recalibration leads to 5% less precursor, the precursor consumption during vaping is increased by 10%. If the recalibration leads to 10% more precursor, the precursor consumption during vaping is decreased by 20%.

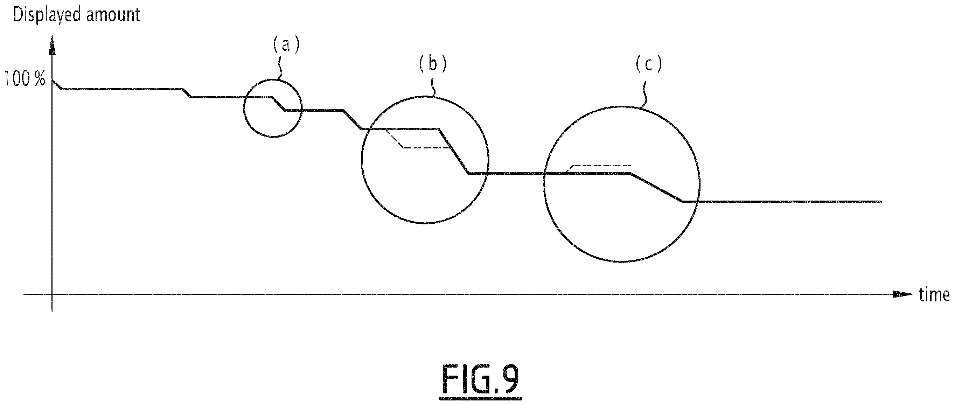

An example of displayed amount of precursor over time is illustrated on Figure 9. The level is initially at 100% of remaining precursor in the storage portion 18. The user is puffing during different vaping sessions. In respect to situation (a) on Figure 9 which is associated to one of these vaping sessions, the displayed amount is equal to the estimated amount of remaining precursor in the storage portion 18. The displayed amount decreases during the vaping session with a slope equal to the precursor consumption in the storage portion. As explained before, the consumption is either a predetermined average consumption or a measure consumption thanks to the puff sensor 26. In respect to situation (b) on Figure 9, a recalibration is done resulting in a precursor amount adjusted downwards as illustrated by the dotted curve. However, in order to not confuse the user which would read a decrease of the precursor amount for no apparent reason for him/her, the displayed amount is not updated instantly. As visible on the Figure 9, the update is done during the next vaping session. The consumption slope is steeper and the displayed amount decreases both due to the vaping and to the recalibration. In respect to situation (c) on Figure 9, a recalibration is done resulting in a precursor amount adjusted upwards as illustrated by the dotted curve. However, in order to not confuse the user which would read an increase of the precursor amount for no apparent reason for him/her, the displayed amount is not updated instantly. As visible on the Figure 9, the update is done during the next vaping session. The consumption slope is reduced, the displayed amount decreases due to the vaping but less than in reality due to the recalibration.

In the example of Figure 2, the electronic system 38 comprises an information processing unit for example formed by a memory and a processor associated with the memory. In this example, each of the estimation module 50, the recalibration module 52 and the post-treatment module 54 is made in the form of software stored in the memory, or a software component, executable by the processor. In a variant, each of the estimation module 50, the recalibration module 52 and the post-treatment module 54 is made in the form of a programmable logic component, such as an FPGA (Field Programmable Gate Array), or in the form of a dedicated integrated circuit, such as an ASIC (Application Specific Integrated Circuit). When the electronic system 38 is made in the form of one or several software programs, i.e., in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

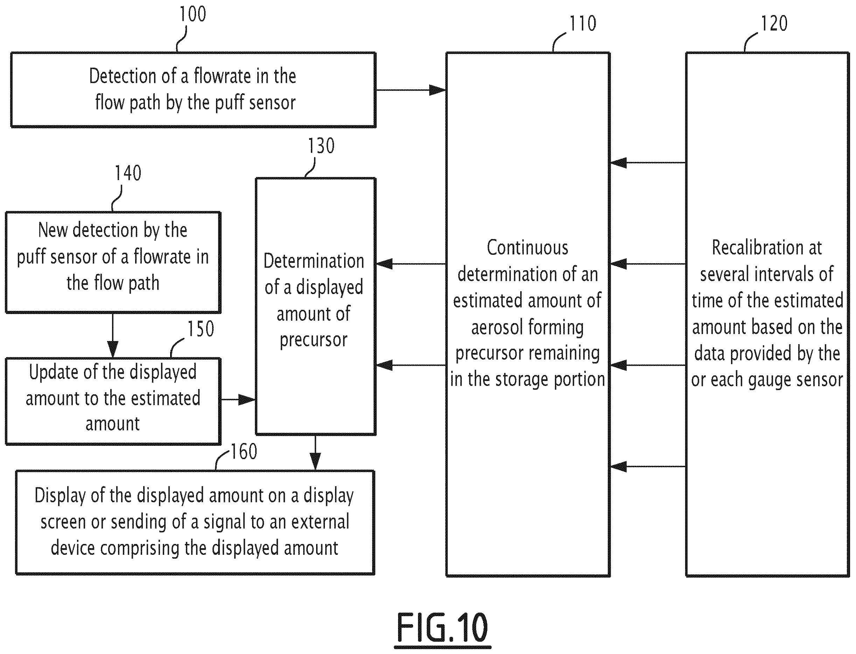

The operation of the electronic system 38 will now be explained in reference to Figure 10 showing a flowchart of the method according to the invention, of continuous estimation of the amount of aerosol forming precursor remaining in the storage portion 18, the method being implemented by the electronic system 38.

Initially, it is considered that the aerosol generation assembly 10 and an external device 32, such a smartphone, are provided to a user. It is also considered that the user has recently replaced the cartridge 14 or refueled the storage portion 18 with the aerosol forming precursor.

The estimated amount is then at 100% and the displayed amount is equal to the estimated amount. This displayed amount is displayed on the display screen 60 arranged on the assembly 10 or on the external device 32.

During a step 100, the puff sensor 26 detects a flowrate in the flow path 20. The detection is notably carried out by detecting a pressure drop in the flow path 20 when the user is puffing. The puff sensor 26 provides data relative to the flowrate of the generated aerosol in the flow path 20. In reference to Figure 6, the puff sensor 26 further provides the duration of each flow. In an advantageous embodiment, in reference to Figure 7, the puff sensor 26 measures the flowrate of the flow and the duration of the flow during each puff. In this case, the puff sensor 26 provides the average value of the flowrate during each puff, and the duration of said puff.

The method comprises a step 110 of continuous determination of an estimated amount of aerosol forming precursor remaining in the storage portion 18 based on the data provided by the puff sensor 20. When the puff sensor 26 detects no presence of aerosol flow in the flow path 20, the continuous estimation is keeping the same amount of aerosol forming precursor in the storage portion. When the puff sensor 26 detects a flow, the estimation module 50 determines automatically a new estimated amount of precursor in the storage portion 18.

In reference to Figure 10, the estimation being carried out continuously, step 110 is carried out during all the method.

In the embodiment according to Figure 6, the estimation module 50 determines the amount of aerosol flowing out of the assembly 10 by multiplying the duration of the said flow by the predetermined average aerosol flowrate Qa. In the example shown on Figure 6, first puff lasts 2 seconds, which represents a consumption of aerosol of 2 × 0.0013 = 0.0026 mL with the same values as previously. This consumption is withdrawn from the initial amount and the estimated remaining amount is recalculated, for example to 99,5%. In a similar way, during the three other puffs, the estimated amount is recalculated by the estimation module 50 by withdrawing respectively 0.0039 mL, 0.0013 mL and 0.0052 mL to the remaining amount of precursor in the storage portion 18.

In the embodiment according to Figure 7, the estimation module 50 determines the amount of aerosol flowing out of the assembly 10 by multiplying the duration of the said flow by the measured flowrate. In the example shown on Figure7, first puff lasts 2 seconds, which represents a consumption of aerosol of 2 × Q1= 2 × 0.0013 = 0.0026 mL with the same values as previously. This consumption is withdrawn from the initial amount and the estimated remaining amount is recalculated. In a similar way, during the three other puffs, the estimated amount is recalculated by the estimation module 50 by withdrawing respectively 3 × Q2, 1x Q3 and 4 × Q4 to the remaining amount of precursor in the storage portion 18.

During step 120, the method comprises a recalibration at several intervals of time of the said estimated amount based on the data provided by the or each gauge sensor 24. Indeed, as illustrated on Figure 8, the puff sensor 24 presents a certain inaccuracy which is accumulating over time. Thus, in order to avoid dealing with elevated levels of total error it must be recalibrated frequently. The recalibration is carried out using the information provided by the or each gauge sensor 26. When a recalibration occurs, the recalibration module 52 replaces the value of the estimated remaining amount of precursor in the storage portion 18 determined by the estimation module 50, by the value measured by the gauge sensor 26.

In particular, the recalibration module 52 recalibrates the amount of aerosol forming precursor when at least one of the confidence scores associated to the data provided by each gauge sensor 24 is higher than the confidence index associated to the estimated amount of aerosol forming precursor remaining in the storage portion 18. Therefore, when at least one of the confidence scores is higher than the confidence index associated to the estimated amount, meaning that the gauge sensor 24 is able to provide a more reliable data concerning the remaining amount of precursor in the storage portion 18, the recalibration is carried out with the data provided by this gauge sensor 24. In particular, the recalibration is carried out when the confidence score associated to the gauge sensor 24 is high enough, notably when the angle α of the assembly 10 with the vertical direction is low. The recalibration is therefore only carried out when the confidence index becomes too high and that the reliability of the estimated amount can be increased with the recalibration.

During step 130, the post-treatment module 54 determines a displayed amount of aerosol forming precursor remaining in the storage portion 18 based on the estimated amount. The displayed amount is updated after a recalibration to the estimated amount after the next detection of a flowrate in the flow path 20 by the puff sensor 26. Therefore, when the user activates the assembly 10 but does not use it for vaping, the level of precursor displayed is not modified. Thus, the user is not confused by the recalibration.

Therefore, the method comprises during a step 140 a new detection by the puff sensor 26 of a flowrate in the flow path 20 after the recalibration step 120.

During step 150, the displayed amount is updated to the estimated amount after the new detection. Advantageously, the displayed amount is updated with a smoothing slope in order to avoid jumps over time of the displayed amount. In reference to Figure 9, as explained previously, the updating is realized by artificially increasing or decreasing the precursor consumption during the vaping session.

During step 160, the displayed amount is displayed on the display screen 60 arranged on the aerosol generation assembly 10. The display screen 60 is, for example, turned on when the assembly 10 is switched on and/or during each vaping session and/or when the user is taping on the screen 60.

In variant or in complement, during step 160, the displayed amount is sent through a signal to the external device 32. The displayed amount is then displayed on the external device 32.

It appears clear that the invention has a number of advantages.

In particular, the invention enables to provide a continuous and accurate estimation of the remaining amount of precursor in the storage portion 18. Thanks to the puff sensor 26, the remaining precursor amount is estimated continuously without depending of the angle α of the assembly 10 with the vertical direction A-A'. The gauge sensor 24 enables to recalibrate regularly this estimated amount and avoids that the error associated to the puff sensor 24 is accumulating over time. The invention enables therefore a highly accurate and reliable precursor level determination in the storage portion. The user has an accurate estimation of the amount of precursor remaining in the storage portion over time and may easily plan the refueling of the storage portion when needed.

Moreover, when there is insufficient supply of precursor to the heater 19, it is possible that high temperatures are generated. Liquid overheating results in the development of a strong unpleasant taste that the users may detect. This phenomenon is called 'dry puff phenomenon'. In providing a continuous and accurate estimation of the remaining precursor level in the storage portion 18, the invention enables to prevent this dry puff for the user which may refuel the storage portion 18 with precursor before this phenomenon may happen.

While there have been shown and described and pointed out the fundamental novel features of the invention as applied to certain inventive embodiments, it will be understood that the foregoing is considered as illustrative only of the principles of the invention and not intended to be exhaustive or to limit the invention to the precise forms disclosed. Modifications or variations are possible in light of the above teachings.

## Claims

1. An aerosol generation assembly (10) comprising:
- a storage portion (18) for storing an aerosol forming precursor;
- a heater (19) configured to heat the aerosol forming precursor to generate aerosol into a flow path (20);
**characterized in that** the aerosol generation assembly (10) further comprises:
- at least one gauge sensor (24) configured to provide data relative to the amount of aerosol forming precursor remaining in the storage portion (18);
- a puff sensor (26) configured to detect and to provide data relative to the flowrate of the generated aerosol in the flow path (20);
- an electronic system (28) for estimating continuously the amount of aerosol forming precursor remaining in the storage portion (18) comprising :
+ an estimation module (50) configured to determine continuously an estimated amount of aerosol forming precursor remaining in the storage portion (18) based on the data provided by the puff sensor (26) ; and
+ a recalibration module (52) configured to recalibrate at several intervals of time said estimated amount based on the data provided by the or each gauge sensor (24), to obtain a recalibrated amount of aerosol forming precursor remaining in the storage portion (18).

2. The aerosol generation assembly (10) according to claim 1, wherein the electronic system (28) further comprises a post-treatment module (54) configured to determine a displayed amount of aerosol forming precursor remaining in the storage portion (18) based on the estimated amount of aerosol forming precursor remaining in the storage portion (18);
the post-treatment module (54) being configured to display said displayed amount on a display screen (60) arranged on the aerosol generation assembly (10) and/or to send a signal to an external device (32) comprising the said displayed amount.

3. The aerosol generation assembly (10) according to claim 2, wherein the displayed amount is updated after a recalibration to the estimated amount after the next detection of a flowrate in the flow path (20) by the puff sensor (26), preferably with a smoothing slope.

4. The aerosol generation assembly (10) according to any one of claim 1 to 3, wherein the puff sensor (26) is configured to detect the presence of a flow into the flow path (20) and the associated duration of the said flow, the estimation module (50) being configured to determine the amount of aerosol flowing out of the aerosol generation assembly (10) by multiplying the duration of the said flow by a predetermined average aerosol flowrate.

5. The aerosol generation assembly (10) according to any one of claim 1 to 3, wherein the puff sensor (26) is configured to detect the presence of a flow into the flow path (20), and measure the flowrate of the flow and the duration of the flow, the estimation module (50) being configured to determine the amount of aerosol flowing out of the aerosol generation assembly (10) by multiplying the duration of the said flow by the measured flowrate.

6. The aerosol generation assembly (10) according to one of the preceding claims, wherein the or each gauge sensor (24) is chosen among:
- a capacitive sensor arranged along the storage portion (18);
- a plurality of hall sensors arranged along the storage portion (18) and able to detect a sliding magnet (38) arranged inside the storage portion (18) and floating on the aerosol precursor;
- a plurality of induction coils arranged along the storage portion (18) and able to heat a metallic strip (40) arranged inside the storage portion (18) and a resistivity sensor (42) able to measure the resistivity of the metallic strip (40).

7. The aerosol generation assembly (10) according to one of the preceding claims, wherein the estimation module (50) is configured to associate a confidence index to the estimated amount of aerosol forming precursor remaining in the storage portion (18),
the confidence index decreasing with time at a decreasing rate function of a predetermined accuracy of the puff sensor (26);
the confidence index being reset after each recalibration.

8. The aerosol generation assembly (10) according to claim 7, wherein the recalibration module (52) is configured to associate a confidence score to the data provided by the or each gauge sensor (24);
the recalibration module (52) being configured to recalibrate the amount of aerosol forming precursor when at least one of the confidence scores is higher than the confidence index associated to the estimated amount of aerosol forming precursor remaining in the storage portion (18).

9. The aerosol generation assembly (10) according to claim 8, wherein the recalibrated amount of aerosol forming precursor remaining in the storage portion (18) is function of the data provided by the or each gauge sensor (24) adjusted by the associated confidence score.

10. The aerosol generation assembly (10) according to claim 8 or 9, wherein the aerosol generation assembly (10) further comprises an accelerometer (26) configured to determine an angle (α) of the aerosol generation assembly (10) with a vertical direction (Z-Z');
the confidence score being function of said angle (α);
the confidence score being minimal when the angle (α) is equal to 90°.

11. The aerosol generation assembly (10) according to one of the preceding claims, wherein the storage portion (18) is defined by walls made of a non-transparent material.

12. The aerosol generation assembly (10) according to one of the preceding claims, comprising a plurality of gauge sensors (24).

13. Method of continuous estimation of the amount of aerosol forming precursor remaining in the storage portion (18) of an aerosol generation assembly (10) according to one of the preceding claims, the method comprising the following steps:
- detection (100) of a flowrate in the flow path (20) by the puff sensor (26);
- continuous (110) determination of an estimated amount of aerosol forming precursor remaining in the storage portion (18) based on the data provided by the puff sensor (26), and
- recalibration (120) at several intervals of time of the said estimated amount based on the data provided by the or each gauge sensor (24).

14. The method according to claim 13, comprising further the followings steps:
- determination (130) of a displayed amount of aerosol forming precursor remaining in the storage portion (18) based on the estimated amount of aerosol forming precursor remaining in the storage portion (18);
- display (160) of said displayed amount on a display screen (60) arranged on the aerosol generation assembly (10) or sending of a signal to an external device (32) comprising the said displayed amount.

15. The method according to claim 13 or 14, comprising further the followings steps:
- new detection (140) by the puff sensor of a flowrate in the flow path (20) after the recalibration step;
- update (150) the displayed amount to the estimated amount after the new detection, preferably with a smoothing slope.

## Patentansprüche

1. Aerosolerzeugungsanordnung (10), umfassend:
- einen Speicherabschnitt (18) zum Speichern eines Aerosolerzeugungsvorläufers;
- eine Heizvorrichtung (19), die konfiguriert ist, um den Aerosolerzeugungsvorläufer zu erhitzen, um Aerosol in einen Strömungsweg (20) zu erzeugen;
**dadurch gekennzeichnet, dass** die Aerosolerzeugungsanordnung (10) weiter Folgendes umfasst:
- mindestens einen Messsensor (24), der konfiguriert ist, um Daten mit Bezug auf den Aerosolerzeugungsvorläufer bereitzustellen, der in dem Speicherabschnitt (18) verbleibt;
- einen Zugsensor (26), der konfiguriert ist, um Daten mit Bezug auf die Durchflussrate des erzeugten Aerosols im Strömungsweg (20) nachzuweisen und bereitzustellen;
- ein elektronisches System (28), um kontinuierlich die Menge von Aerosolerzeugungsvorläufer zu schätzen, die in dem Speicherabschnitt (18) verbleibt, umfassend:
+ ein Schätzmodul (50), das konfiguriert ist, um kontinuierlich eine geschätzte Menge von Aerosolerzeugungsvorläufer zu bestimmen, die in dem Speicherabschnitt (18) verbleibt, basierend auf den Daten, die von dem Zugsensor (26) bereitgestellt werden; und
+ ein Neukalibrierungsmodul (52), das konfiguriert ist, um in mehreren Zeitintervallen die geschätzte Menge basierend auf den Daten neu zu kalibrieren, die von dem oder jedem Messsensor (24) bereitgestellt werden, um eine neukalibrierte Menge von Aerosolerzeugungsvorläufer zu erhalten, die in dem Speicherabschnitt (18) verbleibt.

2. Aerosolerzeugungsanordnung (10) nach Anspruch 1, wobei das elektronische System (28) weiter ein Nachbehandlungsmodul (54) umfasst, das konfiguriert ist, um eine angezeigte Menge von Aerosolerzeugungsvorläufer zu bestimmen, die in dem Speicherabschnitt (18) verbleibt, basierend auf der geschätzten Menge von Aerosolerzeugungsvorläufer, die in dem Speicherabschnitt (18) verbleibt;
wobei das Nachbehandlungsmodul (54) konfiguriert ist, um die angezeigte Menge auf einem Anzeigebildschirm (60) anzuzeigen, der auf der Aerosolerzeugungsanordnung (10) angeordnet ist, und/oder ein Signal an eine externe Vorrichtung (32) zu schicken, das die angezeigte Menge umfasst.

3. Aerosolerzeugungsanordnung (10) nach Anspruch 2, wobei die angezeigte Menge nach einer Neukalibrierung der geschätzten Menge nach dem nächsten Nachweis einer Durchflussrate in dem Strömungsweg (20) durch den Zugsensor (26), vorzugsweise mit einer glättenden Neigung, aktualisiert wird.

4. Aerosolerzeugungsanordnung (10) nach einem der Ansprüche 1 bis 3, wobei der Zugsensor (26) konfiguriert ist, um die Anwesenheit einer Strömung im Strömungsweg (20) und die zugewiesene Dauer der Strömung nachzuweisen, wobei das Schätzmodul (50) konfiguriert ist, um die Menge von Aerosol, die aus der Aerosolerzeugungsanordnung (10) strömt, durch Multiplizieren der Dauer der Strömung mit einer vorherbestimmten durchschnittlichen Aerosoldurchflussrate zu bestimmen.

5. Aerosolerzeugungsanordnung (10) nach einem der Ansprüche 1 bis 3, wobei der Zugsensor (26) konfiguriert ist, um die Anwesenheit einer Strömung in dem Strömungsweg (20) nachzuweisen und die Durchflussrate der Strömung und die Dauer der Strömung zu messen, wobei das Schätzmodul (50) konfiguriert ist, um die Menge von Aerosol, die aus der Aerosolerzeugungsanordnung (10) strömt, durch Multiplizieren der Dauer der Strömung mit der gemessenen Durchflussrate zu bestimmen.

6. Aerosolerzeugungsanordnung (10) nach einem der vorhergehenden Ansprüche, wobei der oder jeder Messsensor (24) ausgewählt ist aus:
- einem kapazitiven Sensor, der entlang des Speicherabschnitts (18) angeordnet ist;
- einer Vielzahl von Hall-Sensoren, die entlang des Speicherabschnitts (18) angeordnet sind und dazu in der Lage sind, einen Gleitmagneten (38) nachzuweisen, der innerhalb des Speicherabschnitts (18) angeordnet ist und auf dem Aerosolvorläufer schwimmt;
- einer Vielzahl von Induktionsspulen, die entlang des Speicherabschnitts (18) angeordnet ist und dazu in der Lage ist, einen Metallstreifen (40) zu erhitzen, der innerhalb des Speicherabschnitts (18) angeordnet ist, und einen Widerstandssensor (42), der dazu in der Lage ist, den Widerstand des Metallstreifens (40) zu messen.

7. Aerosolerzeugungsanordnung (10) nach einem der vorhergehenden Ansprüche, wobei das Schätzmodul (50) konfiguriert ist, um einen Vertrauensindex einer geschätzten Menge von Aerosolerzeugungsvorläufer zuzuweisen, die in dem Speicherabschnitt (18) verbleibt,
wobei der Vertrauensindex mit der Zeit mit einer Abnahmerate abnimmt, die eine Funktion einer vorbestimmten Genauigkeit des Zugsensors (26) ist;
wobei der Vertrauensindex nach jeder Neukalibrierung zurückgestellt wird.

8. Aerosolerzeugungsanordnung (10) nach Anspruch 7, wobei das Neukalibrierungsmodul (52) konfiguriert ist, um eine Vertrauensbewertung den Daten zuzuweisen, die von dem oder jedem Messsensor (24) bereitgestellt werden,
wobei das Neukalibrierungsmodul (52) konfiguriert ist, um die Menge von Aerosolerzeugungsvorläufer zu rekalibrieren, wenn mindestens eine der Vertrauensbewertungen höher als der Vertrauensindex ist, der der geschätzten Menge von Aerosolerzeugungsvorläufer zugewiesen ist, der in dem Speicherabschnitt (18) verbleibt.

9. Aerosolerzeugungsanordnung (10) nach Anspruch 8, wobei die Menge von Aerosolerzeugungsvorläufer, die in dem Speicherabschnitt (18) verbleibt, eine Funktion der Daten ist, die von dem oder jedem Messsensor (24) bereitgestellt werden, der durch die zugewiesene Vertrauensbewertung eingestellt ist.

10. Aerosolerzeugungsanordnung (10) nach Anspruch 8 oder 9, wobei die Aerosolerzeugungsanordnung (10) weiter einen Beschleunigungsmesser (26) umfasst, der konfiguriert ist, um einen Winkel (α) der Aerosolerzeugungsanordnung (10) mit einer vertikalen Richtung (Z-Z') zu bestimmen;
wobei die Vertrauensbewertung eine Funktion des Winkels (α) ist;
wobei die Vertrauensbewertung minimal ist, wenn der Winkel (α) gleich 90° ist.

11. Aerosolerzeugungsanordnung (10) nach einem der vorhergehenden Ansprüche, wobei der Speicherabschnitt (18) durch Wände definiert ist, die aus einem nicht transparenten Material hergestellt sind.

12. Aerosolerzeugungsanordnung (10) nach einem der vorhergehenden Ansprüche, umfassend eine Vielzahl von Messsensoren (24).

13. Verfahren zum kontinuierlichen Schätzen der Menge von Aerosolerzeugungsvorläufer, die in dem Speicherabschnitt (18) einer Aerosolerzeugungsanordnung (10) nach einem der vorhergehenden Ansprüche verbleibt, wobei das Verfahren die folgenden Schritte umfasst:
- Nachweisen (100) einer Durchflussrate in dem Strömungspfad (20) durch den Zugsensor (26);
- kontinuierliches (110) Bestimmen einer geschätzten Menge von Aerosolerzeugungsvorläufer, die in dem Speicherabschnitt (18) verbleibt, basierend auf den Daten, die von dem Zugsensor (26) bereitgestellt werden; und
- Neukalibrieren (120) in verschiedenen Zeitintervallen der geschätzten Menge basierend auf den Daten, die von dem oder jedem Messsensor (24) bereitgestellt werden.

14. Verfahren nach Anspruch 13, weiter umfassend die folgenden Schritte:
- Bestimmen (130) einer angezeigten Menge von Aerosolerzeugungsvorläufer, die in dem Speicherabschnitt (18) verbleibt, basierend auf der geschätzten Menge von Aerosolerzeugungsvorläufer, die in dem Speicherabschnitt (18) verbleibt;
- Anzeigen (160) der angezeigten Menge auf einem Anzeigebildschirm (60), der auf der Aerosolerzeugungsanordnung (10) angeordnet ist, oder Senden eines Signals an eine externe Vorrichtung (32), die die angezeigte Menge umfasst.

15. Verfahren nach Anspruch 13 oder 14, weiter umfassend die folgenden Schritte:
- erneutes Nachweisen (140) durch den Zugsensor einer Durchflussrate in dem Strömungsweg (20) nach dem Schritt des Neukalibrierens;
- Aktualisieren (150) der angezeigten Menge auf die geschätzte Menge nach dem erneuten Nachweis, vorzugsweise mit einer glättenden Neigung.

## Revendications

1. Ensemble de génération d'aérosol (10) comprenant :
- une partie de stockage (18) destinée à stocker un précurseur de formation d'aérosols ;
- un appareil de chauffage (19) configuré pour chauffer le précurseur de formation d'aérosols afin de générer un aérosol sur un trajet d'écoulement (20) ;
**caractérisé en ce que** l'ensemble de génération d'aérosol (10) comprend en outre :
- au moins un capteur de pression à jauge (24) configuré pour fournir des données relatives à la quantité restante d'un précurseur de formation d'aérosols dans la partie de stockage (18) ;
- un capteur de bouffée (26) configuré pour détecter et fournir des données relatives au débit de l'aérosol généré sur le trajet d'écoulement (20) ;
- un système électronique (28) destiné à estimer de façon continue la quantité restante d'un précurseur de formation d'aérosols dans la partie de stockage (18) comprenant :
- un module d'estimation (50) configuré pour déterminer de façon continue une quantité restante estimée d'un précurseur de formation d'aérosols dans la partie de stockage (18) sur la base des données fournies par le capteur de bouffée (26) ; et
- un module de recalibrage (52) configuré pour recalibrer à plusieurs intervalles de temps ladite quantité estimée sur la base des données fournies par le ou chaque capteur de pression à jauge (24), afin d'obtenir une quantité restante recalibrée d'un précurseur de formation d'aérosols dans la partie de stockage (18).

2. Ensemble de génération d'aérosol (10) selon la revendication 1, dans lequel le système électronique (28) comprend en outre un module de post-traitement (54) configuré pour déterminer une quantité restante affichée d'un précurseur de formation d'aérosols dans la partie de stockage (18) sur la base de la quantité restante estimée d'un précurseur de formation d'aérosols dans la partie de stockage (18) ;
le module de post-traitement (54) étant configuré pour afficher ladite quantité affichée sur un écran d'affichage (60) prévu sur l'ensemble de génération d'aérosol (10) et/ou pour envoyer un signal à un dispositif externe (32) comprenant ladite quantité affichée.

3. Ensemble de génération d'aérosol (10) selon la revendication 2, dans lequel la quantité affichée est mise à jour après un recalibrage selon la quantité estimée après la prochaine détection d'un débit sur le trajet d'écoulement (20) par le capteur de bouffée (26), de préférence avec une pente de lissage.

4. Ensemble de génération d'aérosol (10) selon l'une quelconque des revendications 1 à 3, dans lequel le capteur de bouffée (26) est configuré pour détecter la présence d'un flux sur le trajet d'écoulement (20) et la durée associée dudit flux, le module d'estimation (50) étant configuré pour déterminer la quantité d'aérosol qui sort de l'ensemble de génération d'aérosol (10) en multipliant la durée dudit flux par un débit d'aérosol moyen prédéterminé.

5. Ensemble de génération d'aérosol (10) selon l'une quelconque des revendications 1 à 3, dans lequel le capteur de bouffée (26) est configuré pour détecter la présence d'un flux sur le trajet d'écoulement (20), et mesurer le débit du flux et la durée du flux, le module d'estimation (50) étant configuré pour déterminer la quantité d'aérosol qui sort de l'ensemble de génération d'aérosol (10) en multipliant la durée dudit flux par le débit mesuré.

6. Ensemble de génération d'aérosol (10) selon l'une quelconque des revendications précédentes, dans lequel le ou chaque capteur de pression à jauge (24) est choisi parmi :
- un capteur capacitif prévu le long de la partie de stockage (18) ;
- une pluralité de capteurs à effet Hall prévus le long de la partie de stockage (18) et capables de détecter un aimant coulissant (38) prévu à l'intérieur de la partie de stockage (18) et qui flotte sur le précurseur d'aérosols ;
- une pluralité de bobines d'induction prévues le long de la partie de stockage (18) et capables de chauffer une bande métallique (40) prévue à l'intérieur de la partie de stockage (18) et un capteur de résistivité (42) capable de mesurer la résistivité de la bande métallique (40).

7. Ensemble de génération d'aérosol (10) selon l'une quelconque des revendications précédentes, dans lequel le module d'estimation (50) est configuré pour associer un indice de confiance à la quantité restante estimée d'un précurseur de formation d'aérosols dans la partie de stockage (18),
l'indice de confiance diminuant au fil du temps à une vitesse de diminution qui dépend d'une précision prédéterminée du capteur de bouffée (26) ;
l'indice de confiance étant réinitialisé après chaque recalibrage.

8. Ensemble de génération d'aérosol (10) selon la revendication 7, dans lequel le module de recalibrage (52) est configuré pour associer un score de confiance aux données fournies par le ou chaque capteur de pression à jauge (24) ;
le module de recalibrage (52) étant configuré pour recalibrer la quantité d'un précurseur de formation d'aérosols lorsque au moins l'un des scores de confiance est supérieur à l'indice de confiance associé à la quantité restante estimée d'un précurseur de formation d'aérosols dans la partie de stockage (18).

9. Ensemble de génération d'aérosol (10) selon la revendication 8, dans lequel la quantité restante recalibrée d'un précurseur de formation d'aérosols dans la partie de stockage (18) dépend des données fournies par le ou chaque capteur de pression à jauge (24) ajustées par le score de confiance associé.

10. Ensemble de génération d'aérosol (10) selon la revendication 8 ou la revendication 9, dans lequel l'ensemble de génération d'aérosol (10) comprend en outre un accéléromètre (26) configuré pour déterminer un angle (α) de l'ensemble de génération d'aérosol (10) avec une direction verticale (Z - Z') ;
le score de confiance étant dépendant dudit angle (α) ;
le score de confiance étant minimal lorsque l'angle (α) est égal à 90°.

11. Ensemble de génération d'aérosol (10) selon l'une quelconque des revendications précédentes, dans lequel la partie de stockage (18) est définie par des parois composées d'un matériau non transparent.

12. Ensemble de génération d'aérosol (10) selon l'une quelconque des revendications précédentes, comprenant une pluralité de capteurs de pression à jauge (24).

13. Procédé d'estimation continue de la quantité restante d'un précurseur de formation d'aérosols dans la partie de stockage (18) d'un ensemble de génération d'aérosol (10) selon l'une quelconque des revendications précédentes, le procédé comprenant les étapes suivantes :
- la détection (100) d'un débit sur le trajet d'écoulement (20) par le capteur de bouffée (26) ;
- la détermination continue (110) d'une quantité restante estimée d'un précurseur de formation d'aérosols dans la partie de stockage (18) sur la base des données fournies par le capteur de bouffée (26), et
- le recalibrage (120) à plusieurs intervalles de temps de ladite quantité estimée sur la base des données fournies par le ou chaque capteur de pression à jauge (24).

14. Procédé selon la revendication 13, comprenant en outre les étapes suivantes :
- la détermination (130) d'une quantité restante affichée d'un précurseur de formation d'aérosols dans la partie de stockage (18) sur la base de la quantité restante estimée d'un précurseur de formation d'aérosols dans la partie de stockage (18) ;
- l'affichage (160) de ladite quantité affichée sur un écran d'affichage (60) prévu sur l'ensemble de génération d'aérosol (10) ou l'envoi d'un signal à un dispositif externe (32) comprenant ladite quantité affichée.

15. Procédé selon la revendication 13 ou la revendication 14, comprenant en outre les étapes suivantes :
- une nouvelle détection (140), par le capteur de bouffée, d'un débit sur le trajet d'écoulement (20) après l'étape de recalibrage ;
- la mise à jour (150) de la quantité affichée selon la quantité estimée après la nouvelle détection, de préférence avec une pente de lissage.
